Europäisches Patentamt

European Patent Office

Office européen des brevets

(11) Publication number: 0 293 022 B1

# EUROPEAN PATENT SPECIFICATION

(45) Date of publication of patent specification: 22.01.92

(21) Application number: 88200721.4

(22) Date of filing: 14.04.88

(51) Int. Cl.⁵: **A23G 9/28**, A23G 3/20, A23P 1/12, B29C 47/04, B29C 47/70

(54) Method of producing a variegated ice confection product.

(30) Priority: 22.04.87 GB 8709479
22.04.87 GB 8709480

(43) Date of publication of application:
30.11.88 Bulletin 88/48

(45) Publication of the grant of the patent:
22.01.92 Bulletin 92/04

(84) Designated Contracting States:
AT BE CH DE ES FR GB GR IT LI NL SE

(56) References cited:
BE-A- 391 558          DE-U- 8 612 344
FR-A- 725 258          FR-A- 1 349 276
FR-A- 2 497 729        GB-A- 1 169 500
JP-A-62 198 433        US-A- 2 389 084
US-A- 2 514 254        US-A- 2 758 553
US-A- 2 774 314        US-A- 2 816 518
US-A- 3 014 437        US-A- 3 147 717
US-A- 3 392 685        US-A- 3 918 867

(73) Proprietor: UNILEVER NV
Burgemeester s'Jacobplein 1 P.O. Box 760
NL-3000 DK Rotterdam(NL)

(84) Designated Contracting States:
BE CH DE ES FR GR IT LI NL SE AT

Proprietor: UNILEVER PLC
Unilever House Blackfriars P.O. Box 68
London EC4P 4BO(GB)

(84) Designated Contracting States:
GB

(72) Inventor: Butcher, Ian
243 Southway
Guildford Surrey GU2 6DT(GB)
Inventor: Hillman, Kevin Peter
Willow Cottage Stoke Road
Bishops Cleve Cheltenham, Glos. GL52
4RP(GB)

(74) Representative: Van kan, Johan Joseph
Hubert, Ir. et al
P.O. Box 645 Boschdijk 155
NL-5600 AP Eindhoven(NL)

EP 0 293 022 B1

## Description

The invention relates to a method of producing a variegated ice confection product by extrusion comprising feeding a first viscous product trhough a tube, rotationally introducing a second, different viscous product into said first viscous product, while preventing homogeneous mixing, to form a stream of the two distinct products. Such a method is known from US-A-2,389,084, according to which process however it is not possible to obtain a variegated ice confection product having a cross-sectional view as indicated in fig. 1 being a pattern having a simple symmetry. With the apparatus as known from US-A-2,816,518 an ice confection product can be obtained in which the streaks of syrup becomes twisted into spiral or wirl shapes, but the pattern is not as disclosed in fig. 1. US-A-3,918,867 relates to a device for extruding permanent magnet bodies in which device a nozzle has been provided with partitions extending in the direction of extrusion. With this device a homogeneous mixture of magnetic particles and binder is extruded which is in a completely different field than the production of an ice confection product.

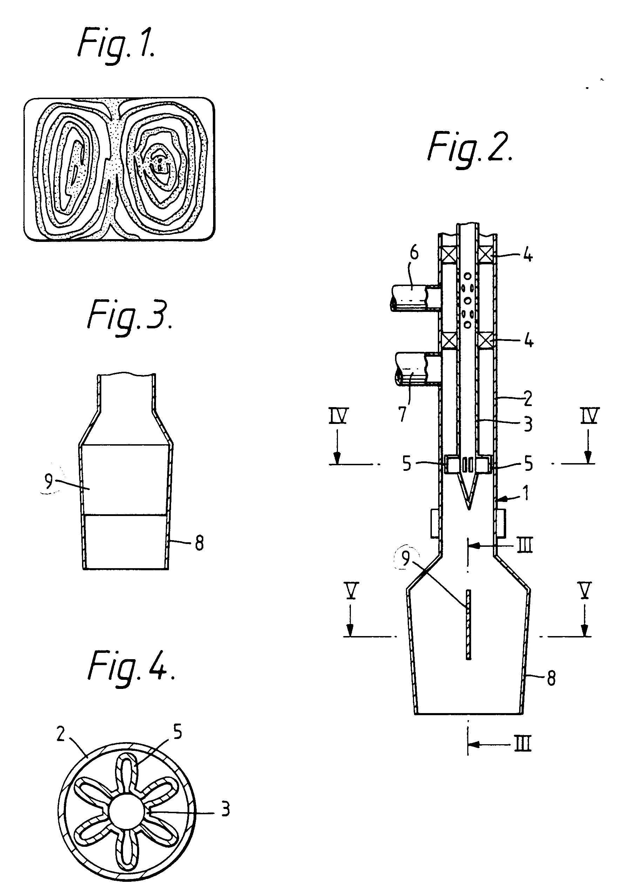

The present invention provides variegated ice confection product having a new pattern for such an ice product of which an example has been indicated in fig. 1. Preferred ice confection products are ice cream, sorbet, sherbet, milk ice, water ice and mellorine.

The method of producing a variegated ice confection product according to the invention is characterized in conducting the stream along one or a purality of dividers (9) arranged according to a regular pattern in the tube (8), each divider (9) having one of its main dimensions substantially in the direction of flow of the stream prior to extrusion to form the product.

The product according to the invention has multiple patterns through the body of the product, each of which pattern is a roughly concentric or spirally striped pattern and which patterns are preferably arranged in approximate symmetry. This symmetry may be a simple symmetry having one axis or one plane of symmetry, but also more complex symmetries are possible eg. with two or more planes of symmetry, which planes can be parallel or crossing, or two or more parallel planes with at least one further plane crossing the parallel ones for instance at right angles.

Preferably, the cross-section of the stream is expanded prior to its being conducted past the divider or dividers. After said expansion the stream is for example preferably substantially rectangular in cross-section to correspond with the outline of a preferred final product/package. Of course other outlines eg. circular can be chosen for the expanded stream, depending on the outline of the final product/package.

More than one different viscous product can be introduced into the first viscous product, thereby giving especially interesting effects. For consumer effect the viscous products will normally differ optically but flavour and texture differences are also beneficial. These differences may be used separately, together or (optimally) also with optical differences.

The extruded stream is preferably cut at right-angles to its flow, eg. by a wire, to form the product as it is extruded from the tube downstream from the divider or dividers.

Particularly attractive patterns are obtained when one or more dividers are arranged in a regular way in the stream such as through its centre line. If multiple dividers are used, a cross-shaped arrangement, a parallel arrangement and a combination thereof are suitable. Of course other interesting variegated products, not necessarily with symmetrical patterns, can be made by using dividers with other shapes, eg. circular or zig-zag in cross-section.

The invention also provides an apparatus for manufacturing variegated extruded products comprising an extrusion tube fed by a first and at least a second conduit, at least part of said such second conduit in the tube being rotatable about an axis which is preferably centrally disposed in the tube, and at least one divider arranged downstream of the second conduit with one main dimension substantially in the main direction of the tube. Preferably, the cross-section of the tube increases shortly before the position of the divider, considered in a downstream direction. The divider, or baffle, can conveniently be a piece of metal plate.

For a better understanding of the present invention, reference may be made to the accompanying drawings in which

Fig. 1    is a cross-sectional view of an extruded product according to the invention in a simple embodiment thereof;

Fig. 2    is a vertical section of an apparatus according to the invention for making the product of Fig. 1;

Fig. 3    is a partial sectional view taken along the line III-III in Fig. 2;

Fig. 4    is a cross-sectional view taken along the line IV-IV in Fig. 2;

Fig. 5    is a partial cross-sectional view taken along the line V-V in Fig. 2 and

Figs 6    to 10 are further examples of dividers in a sectional view similar to Fig. 5.

An extrusion apparatus (nozzle) 1 according to the present invention comprises a tube 2 in which a hollow shaft 3 is rotatably mounted in sealing bearings 4. The shaft is perforated between the bearings. At one end it is provided with driving means and at the other end with hollow vanes 5 communicating with the hollow shaft and opening at their ends remote from the shaft. The vanes 5 are rotatable with a little play inside the tube 2.

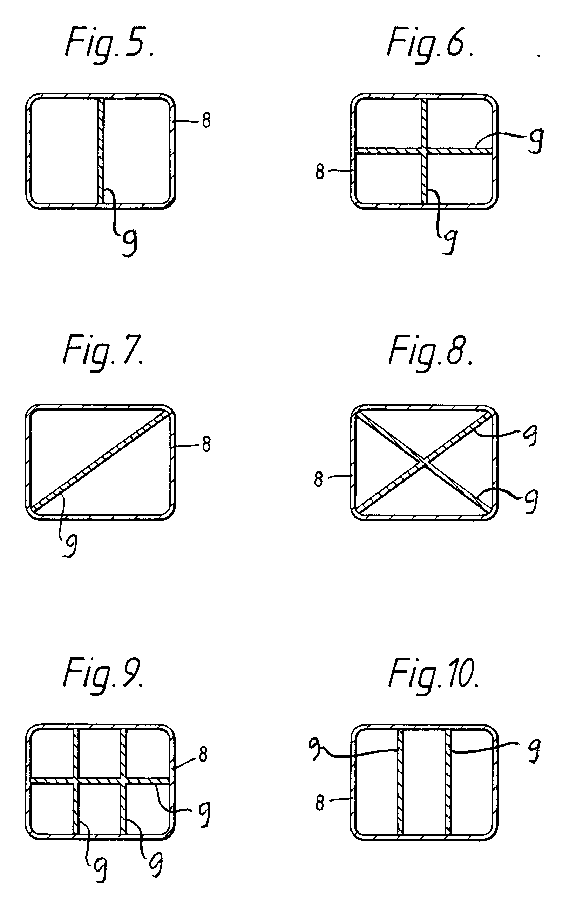

A feeding conduit 6 communicates with the tube 2 between the bearings 4 and a second feeding conduit 7 between one bearing and the vanes 5. Beyond the vanes the tube gradually widens to an end nozzle 8 of roughly rectangular cross-section with rounded corners to conform to a usual "rectangular" ice-cream tub. In this widened end nozzle 8 a rigid metal plate divider 9 is arranged having one main dimension in the longitudinal axis of the conduit. The other main direction is spanning the width of the rectangular cross-section as shown in Fig. 5.

Fig. 6 to 10 show different arrangements of dividers giving rise to other patterns of the material extruded through the nozzle.

The pattern of the product obtained by the nozzle depicted in Figs. 2 to 5 is schematically shown in Fig. 1.

Preferred viscous products are viscous aerated products such as ice-cream, sorbets etc. Sorbets are particularly useful as viscous products to be introduced rotationally, ie. to form the pattern. However, it should be noted that non-aerated products can be used.

To make, for example, an ice cream product patterned with a differently coloured sorbet, ice cream is fed through feeding conduit 7 to tube 2 and a differently coloured sorbet is fed through feeding conduit 6, hollow shaft 3 and hollow vanes 5. The hollow shaft is rotated at 40/50 r.p.m. The end of the widened end nozzle 8 is suitably blocked in a customary manner to help establish continuous, full flow. When this has been achieved, portions of the extrudate are cut off as they leave the apparatus and are packaged and hardened in a conventional manner in "rectangular" tubs, which in horizontal outline conform to the horizontal cross-section of the end nozzle 8. The cross-section of the extrudate obtained in this manner is shown in Fig. 1.

## Claims

1. A method of producing a variegated ice confection product by extrusion comprising feeding a first viscous product through a tube (2,8) rotationally introducing a second, different viscous product into said first viscous product, while preventing homogeneous mixing, to form a stream of the two distinct products, characterized in conducting this stream along one or a plurality of flat plate dividers (9) arranged according to a regular pattern in the tube (8), each divider (9), having its plane substantially in the direction of flow of the stream prior to extrusion to form the product.

## Revendications

1. Un procédé pour la fabrication d'une confiserie glacée bigarrée par extrusion comprenant l'apport d'un premier produit visqueux à travers un tube (2, 8), l'introduction en rotation d'un second produit visqueux différent dans ledit premier produit visqueux, tout en empêchant un mélange homogène, pour former un flux des deux produits distincts , caractérisé en ce qu'on conduit ce flux selon un ou une pluralité de dividers à plaques plates (9) disposés selon un dessin régulier dans le tube (8), chaque diviseur (9) ayant son plan sensiblement dans la direction d'écoulement du flux antérieurement à l'extrusion pour former le produit.

## Patentansprüche

1. Verfahren zur Herstellung eines vielfarbigen Eiskonfektproduktes durch Extrusion, bei welchem Verfahren ein erstes viskoses Produkt durch ein Rohr (2, 8) zugeführt wird und in dieses erste viskose Produkt ein zweites, verschiedenes viskoses Produkt rotierend eingeführt wird, wobei ein homogenes Mischen verhindert wird, um einen Strom der beiden gesonderten Produkte zu bilden, dadurch gekennzeichnet, daß dieser Strom längs einem oder einer Mehrzahl von flachen plattenförmigen Teilern (9) geführt wird, welche gemäß einem regelmäßigen Muster im Rohr (8) angeordnet sind, wobei jeder Teiler (9) mit seiner Ebene im wesentlichen in Fließrichtung des Stromes vor der Extrusion zur Formung des Produktes liegt.

Fig.1.

Fig.3.

Fig.2.

Fig.4.

EP 0 293 022 B1

Fig.5.

Fig.6.

Fig.7.

Fig.8.

Fig.9.

Fig.10.

5